# EUROPÄISCHE PATENTSCHRIFT

(11) **EP 1 339 543 B1**
(45) Veröffentlichungstag und Bekanntmachung des Hinweises auf die Patenterteilung: **03.09.2008**
(21) Anmeldenummer: 01990530.6
(22) Anmeldetag: 07.12.2001
(51) Int. Cl.: B32B 5/20, B32B 5/32

(54) **SCHICHTFORMKÖRPER**
LAMINAR SHAPED BODY
CORPS MOULE STRATIFIE

(30) Priorität: 07.12.2000 DE 20020712 U
(43) Veröffentlichungstag der Anmeldung: 03.09.2003
(73) Patentinhaber: EFA Entwicklungsgesellschaft für Akustik mbH, 58454 Witten (DE)
(72) Erfinder: BOPP, Michael, 58455 Witten (DE)
(74) Vertreter: Jönsson, Hans-Peter
(86) Internationale Anmeldenummer: PCT/EP2001/014406
(87) Internationale Veröffentlichungsnummer: WO 2002/045948

(56) Entgegenhaltungen:
- EP-A- 0 334 178
- DE-A- 2 049 978
- DE-A- 3 043 044
- DE-A- 4 226 988
- US-A- 5 493 081

## Beschreibung

Gegenstand der Erfindung ist ein Schichtformkörper mit einem definierten Schichtaufbau und ein Verfahren zu seiner Herstellung.

Im Stand der Technik sind bereits eine Reihe von Schichtformkörpern, zur Herstellung von Fahrzeuginnenausstattungsteilen, vorgeschlagen worden. Diese weisen üblicherweise einen Mehrschichtaufbau aus.

DE 43 21 225 A1 beschreibt ein flächiges Auskleidungsteil für Kraftfahrzeuge, wie Kfz-Himmel oder dergleichen, mit einer ein- oder mehrlagigen Kernschicht und zwei diese abdeckenden Außenschichten aus Naturfaservlies, welche mit der Kernschicht durch je eine Kleberschicht verbunden sind, dadurch gekennzeichnet, dass die Kleberschichten aus Epoxidharzschaum bestehen und dass die Außenschichten aus ausschließlich locker vernadeltern Material bestehen, sowie Verfahren insbesondere zur Herstellung eines derartigen Auskleidungsteils.

DE 24 18 849 OS betrifft ein flexibles absorbierendes Gebilde mit einer oberen Schicht aus polymerem Schaumstoff, der für Flüssigkeiten durchlässig ist, und einer darunterliegenden Schicht eines flüssigkeitsabsorbierenden Materials und einem unteren Film aus einem flexiblen feuchtigkeitsundurchlässigen Material und ist dadurch gekennzeichnet, dass der polymere Schaumstoff ein zusammengedrückter Schaumstoff eines Additionspolymeren aus einem wässrigen polymeren Latex ist, wobei die Schicht des zusammengedrückten Schaumstoffs eine Dicke von etwa 0,0254 bis etwa 0,254 mm hat.

DE 297 13 267 U1 betrifft ein Mehrschicht-Verbundmaterial, insbesondere zu schalldämmenden Abschirmung des Motorraums von Kraftfahrzeugen, das durch eine erste Deckschicht aus einem Vliesstoff, eine erste Innenschicht aus Schaumstoff und eine zweite Deckschicht aus einem Vliesstoff kennzeichnet ist.

DE 42 26 988 A1 betrifft ein Formteil aus mit einem geschäumten Kunstharz durchtränkten Naturfasern, das aus zwei Außenschichten aus Naturfasern, welche in einer oder mehreren vorbestimmten Richtungen angeordnet sind, und aus einer von den Außenschichten eingefassten Mittelschicht besteht, die zumindest teilweise von dem geschäumten Kunstharz gebildet ist. Durch die Anordnung der Naturfasern in vorbestimmten Richtungen erhält das Formteil eine höhere Belastbarkeit.

DE 20 49 978 OS betrifft ein Verfahren zur Herstellung eines porösen Schichtstoffes, bestehend aus mindestens einer Trägerschicht aus Textil, Leder oder dergleichen, mindestens einer Schaumstoffschicht aus Polyurethan und mindestens einer Deckschicht, bei dem offenporiger Polyurethanschaum eines Raumgewichts von weniger als 100 kg/cm³ mit der Trägerschicht verbunden und auf zwischen 2 und 25 % der Anfangsdicke verdichtet sowie mit der Deckschicht versehen wird.

EP 0 650 828 A1 betrifft einen Schichtkörper mit einem flächigen Trägerteil aus einem verfestigten Basisvlies mit einem Gehalt an thermoplastischen Kunststofffasern, welches zumindest auf einer Seite mit einer kunststoffhaltigen Deckschicht versehen ist, ist dadurch gekennzeichnet, dass das Basisvlies mit der Deckschicht durch Anwendung von Druck und Wärme über eine Zwischenschicht mit thermoplastischem Anteil verbunden ist, deren Material von demjenigen der Kunststofffasern des Basisvlieses verschieden oder gleich ist und deren Erweichungstemperatur oberhalb derjenigen der Kunststofffasern des Basisvlieses liegt sowie Verfahren zu dessen Herstellung sowie seine Verwendung.

Die Aufgabe der vorliegenden Erfindung besteht jedoch in einer ersten Ausführungsform in der Bereitstellung eines Schichtformkörpers, insbesondere für die Fahrzeuginnenausstattung im Mehrschichtaufbau mit integrierten akustisch wirksamen Flächen und Bereichen zur Aufnahme von Stoßenergie.

EP 0 334 178 A2 **beschreibt einen Schallisolationsaufbau, welcher durch ein Hinterschäumen eines mit einem Vlies oder offenzelligen Schaumstoff versehenen Teppich erzeugt wird. Durch das Eindringen in das Vlies oder den offenzelligen Schaumstoff wird eine Zellbildung des Schaumstoffs in diesem Bereich verhindert oder zumindest stark zurückgedrängt, wodurch eine Art Schwerschicht gebildet wird. Der verbleibende Rest des zugeführten Schaummaterials bildet - wie sonst auch - seine Zellen aus und füllt den gesamten verbleibenden Raum der Form aus. Hinter dem Teppich kommen somit eine zellenlose oder zellenarme verfestigte Schicht und eine zellenhaltige elastische Schaumstoffschicht zum Liegen.**

**In ähnlicher Weise beschreibt** DE 31 04 835 A1 **eine hinterschäumte textile Flächenverkleidung, bei der das textile Flächengebilde mit einer Trägerschicht aus offenzelligem Kunststoff mit geringem Porenvolumen versehen ist und die Hinterschäumung auf diese Trägerschicht aufgebracht wird. Das Aufbringen der Hinterschäumung erfolgt dort konturgenau in einer geschlossenen Form, wobei die Entlüftung durch die Trägerschicht erfolgt. Es handelt sich also im Sinne einer Schallisolation um ein konventionelles Feder-Masse-System.**

**Aus beispielsweise** DE 20 06 741 B **sind die physikalischen Parameter von Feder und Masse hinreichend bekannt.**

Die vorgenannte Aufgabe wird in einer ersten Ausführungsform gelöst mit einem Schichtformkörper 1 mit einem Schichtaufbau der Reihenfolge:
a) Trägermedium **2 aus Papier, Folie oder Vlies,**
b) Mit Fasermaterial gefülltes, die Strukturfestigkeit bestimmendes Matrix-Schaumstoffmaterial **3 aus expandiertem Polyurethan, Epoxid- oder Polyesterharz, wobei das Fasermaterial Fasern aus Glas und/oder Naturfasern, ausgewählt aus Sisal, Hanf, Jute, Flachs und/oder Baumwolle umfasst,**
c) Semipermeable Zwischenschicht **4 aus Papier, Folie oder Vlies** und
d) Vorbestimmter Zuschnitt eines halbharten Schaumstoffmaterials 5, **umfassend einen Polyurethan-Halbhartschaum mit einer Dichte im Bereich von 10 bis 30 kg/m³.**

Der erfindungsgemäße Schichtformkörper 1 weist eine semipermeable Zwischenschicht auf, entlang der die Expansion des Matrix-Schaumstoffmaterials 3 erfolgt. Gleichzeitig durchdringt eine geringe Menge des Matrixmaterials 3 diese Zwischenschicht und sorgt damit für die Verklebung des eingelegten Zuschnitt eines halbharten Schaumstoffmaterials 5. Unter dem Druck und der Temperatur des Formwerkzeuges wird der Zuschnitt des halbharten Schaumstoffmaterials 5 zudem verformt und stellenweise verdichtet, wodurch die konkrete Formgebung erreicht wird und eine den späteren Gebrauch mögliche Oberfläche gestaltet wird.

Der erfindungsgemäße Schichtformkörper 1 ist beispielsweise dadurch erhältlich, dass man **in einem Arbeitsgang**
a) auf einem Trägermedium 2 **aus Papier, Folie oder Vlies** ein die Strukturfestigkeit bestimmendes Fasermaterial in Form von Matten oder Zuschnitten auflegt, **wobei das Fasermaterial Fasern aus Glas und/oder Naturfasern, ausgewählt aus Sisal, Hanf, Jute Flachs und/oder Baumwolle umfasst,**
b) die Oberfläche des Fasermaterials mit einem expandierbaren Matrixmaterial **aus Polyurethan, Epoxid- oder Polyesterharz** versieht,
c) anschließend eine semipermeable Zwischenschicht **4 aus Papier, Folie oder Vlies** und daran anschließend einen Zuschnitt eines halbharten Schaumstoffmaterials **5, umfassend einen Polyurethan-Halbhartschaum, mit einer Dichte im Bereich von 10 bis 30 kg/m³,** auflegt und
d) den Schichtkörper 1 bei einer Temperatur im Bereich von 40 bis 120 °C in einem Formwerkzeug aushärtet
**und gegebenenfalls eine dekorative Oberfläche in einem weiteren Arbeitsgang aufkaschiert.**

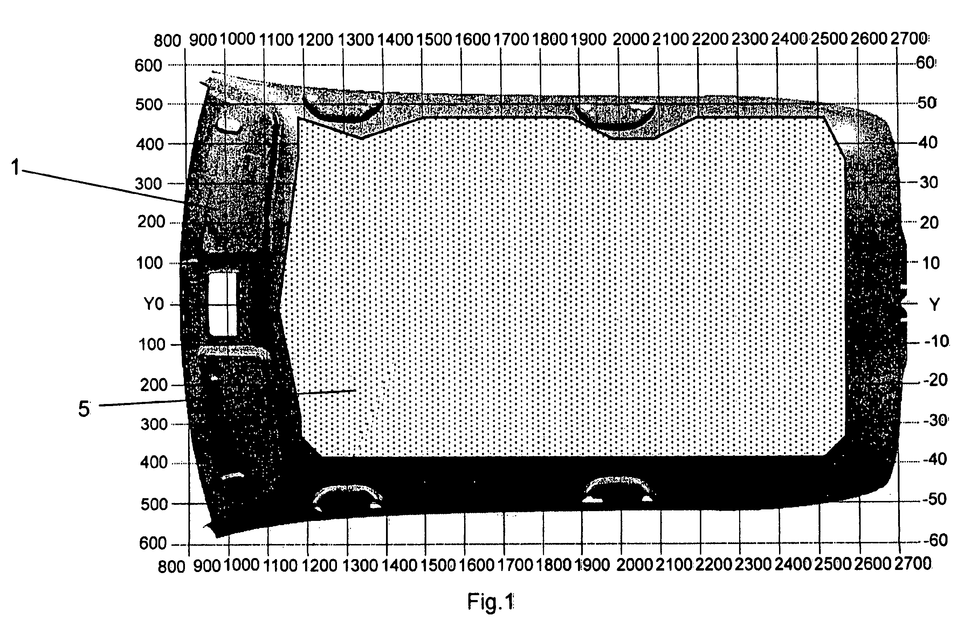

In der Fig. 1 wird die Draufsicht eines erfindungsgemäßen Schichtformkörpers 1 dargestellt, bei dem der Bereich des vorstimmten Zuschnitts eines halbharten Schaumstoffmaterials 5 punktiert dargestellt ist.

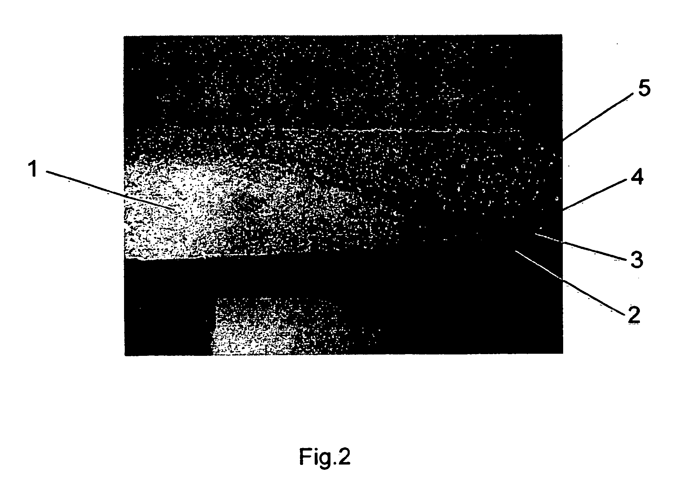

In der Fig. 2 wird ein Schnitt durch einen erfindungsgemäßen Schichtkörper 1 dargestellt, bei dem erkennbar ist, dass das mit Fasermaterial gefüllte, die Strukturfestigkeit bestimmende Matrix-Schaumstoffmaterial 3 in einem bestimmten Bereich die semipermeable Zwischenschicht durchdringt und für die Verklebung mit dem halbharten Schaumstoffmaterial 5 bewirkt. Gleichzeitig wird und dem Druck und der Temperatur des Formwerkzeugs der halbharte Schaumzuschnitt 5 durch die Einwirkung des Matrix-Schaumstoffmaterials 3 verformt und stellenweise verdichtet.

Gemäß der vorliegenden Erfindung ist das Trägermedium 2 aus Papier, Folie oder Vlies hergestellt. Die physikalisch-chemischen Eigenschaften dieses Trägermediums 2 sind von geringerer Bedeutung, da dieses im wesentlichen dazu dient, den Schichtformkörper 1 wieder aus dem Formwerkzeug zu entfernen.

Demgegenüber bestimmt das Matrix-Schaumstoffmaterial 3 die Strukturfestigkeit des Schichtformkörpers 1. Besonders bevorzugt im Sinne der vorliegenden Erfindung wird daher dieses Matrixmaterial 3 auf der Basis eines Zweikomponenten-Materials, wie Polyurethan, Epoxid- oder Polyesterharz hergestellt.

Besonders bevorzugt im Sinne der vorliegenden Erfindung wird das Fasermaterial nach Wahl der späteren Verwendung im Sprüh- oder Gießverfahren beschichtet oder in Form einer Direktbeschichtung mit Schnittfasern aus Glas und/oder Naturfasern nach bekannten Verfahren mit dem flüssigen Matrixmaterial 3 beschichtet.

Dementsprechend umfasst das Fasermaterial Fasern aus Glas-und/oder Naturfasern, wobei die Naturfasern ausgewählt sind aus Sisal, Hanf, Jute, Flachs und/oder Baumwolle.

In Bereichen hoher Stoßenergie-Aufnahme weist der erfindungsgemäße Schichtformkörper 1 vorzugsweise eine größere Dichte auf, als in Bereichen niedriger Energieaufnahme. Dies kann beispielsweise dadurch realisiert werden, dass man die Mengenverteilung des Matrix-Schaumstoffmaterials 3 im Rohzustand der lokalen Stoßenergie-Aufnahme anpasst. Es ist somit möglich, zur Erzielung der Bereiche mit einer hohen Stoßenergie-Aufnahme beim Eintrag des Matrixmaterials 3 die Mengenverteilung so zu gestalten, dass in diesen Bereichen ein höherer Anteil an Matrixmaterial 3 vorhanden ist. Dadurch kann ein höheres Füllvolumen der expandierten Matrix 3 erhalten werden.

Im Anschluss an das Matrix-Schaumstoffmaterial 3 befindet sich in den erfindungsgemäßen Schichtformkörpern 1 eine semipermeable Schicht 4.

Durch die semipermeable Schicht 4 hindurch, die aus Papier, Folie oder Vlies hergestellt wird, erfolgt die Expansion entlang dieser Grenzflächen und reguliert diese durch die eingetragene Menge.

Als weitere Schicht des erfindungsgemäßen Schichtformkörpers 1 findet sich der Zuschnitt eines halbharten Schaumstoffmaterials 5, der aus einem Polyurethan-Halbhartschaum mit einer Dichte im Bereich von 10 bis 30 kg/cm³, besteht.

Die vorgenannte Anordnung wird nach dem Aufeinanderlegen in einem Formwerkzeug bei einer dem Prozess angepassten Temperatur im Bereich von 40 bis 120 °C ausgehärtet.

Eine weitere Ausführungsform der vorliegenden Erfindung betrifft ein Verfahren zur Herstellung eines Schichtformkörpers 1, dass dadurch gekennzeichnet ist, dass man **in einem Arbeitsgang**
a) auf einem Trägermedium **2 aus Papier, Folie oder Vlies** ein die Strukturfestigkeit bestimmendes Fasermaterial in Form von Matten oder Zuschnitten auflegt, **wobei das Fasermaterial Fasern aus Glas und/oder Naturfasern, ausgewählt aus Sisal, Hanf, Jute Flachs und/oder Baumwolle umfasst,**
b) die Oberfläche des Fasermaterials mit einem expandierbaren Matrixmaterial **aus Polyurethan, Epoxid- oder Polyesterharz** versieht,
c) anschließend eine semipermeable Zwischenschicht 4 aus Papier, **Folie oder Vlies** und daran anschließend einen Zuschnitt eines halbharten Schaumstoffmaterials 5, **umfassend einen Polyurethan-Halbhartschaum, mit einer Dichte im Bereich von 10 bis 30 kg/m³,** auflegt und
d) den Schichtkörper 1 bei einer Temperatur im Bereich von 40 bis 120 °C in einem Formwerkzeug aushärtet
**und gegebenenfalls eine dekorative Oberfläche in einem weiteren Arbeitsgang aufkaschiert.**

In einem weiteren Arbeitsgang kann dann der erfindungsgemäße Schichtformkörper 1 mit einer dekorativen Oberfläche, beispielsweise einer Dekorschicht, insbesondere aus Textil kaschiert werden, damit die akustisch wirksame Schicht des Halbhartschaums 5 erhalten bleibt.

In einem analogen Verfahrensschritt kann jedoch auch eine Direktkaschierung dadurch erfolgen, dass man die Dekorschicht 6 mit einer Sperrfolie einsetzt. Hierbei wird jedoch die akustische Wirksamkeit des Schichtformkörpers 1 reduziert.

## Patentansprüche

1. Schichtformkörper (1) mit einem Schichtaufbau der Reihenfolge:
a) Trägermedium (2) aus Papier, Folie oder Vlies,
b) Mit Fasermaterial gefülltes, die Strukturfestigkeit bestimmendes Matrix-Schaumstoffmaterial (3) aus expandiertem Polyurethan, Epoxid- oder Polyesterharz, wobei das Fasermaterial Fasern aus Glas und/oder Naturfasern, ausgewählt aus Sisal, Hanf, Jute, Flachs und/oder Baumwolle umfasst,
c) Semipermeable Zwischenschicht (4) aus Papier, Folie oder Vlies und
d) Vorbestimmter Zuschnitt eines halbharten Schaumstoffmaterials (5), umfassend einen Polyurethan-Halbhartschaum mit einer Dichte im Bereich von 10 bis 30 kg/m³.

2. Schichtformkörper (1) nach Anspruch 1, **dadurch gekennzeichnet, dass** das Matrix-Schaumstoffmaterial (3) in Bereichen hoher Stoßenergieaufnahme eine größere Dichte aufweist als in Bereichen niedriger Stoßenergieaufnahme.

3. Schichtformkörper (1) nach Anspruch 1, **dadurch gekennzeichnet, dass** die Mengenverteilung des Matrix-Schaumstoffmaterials (3) im Rohzustand der lokalen Stoßenergieaufnahme angepasst ist.

4. Schichtformkörper (1) nach einem der Ansprüche 1 bis 3, **dadurch gekennzeichnet, dass** diese weiterhin eine
e) Dekorschicht insbesondere aus textilem Material umfasst.

5. Schichtformkörper (1) nach Anspruch 4, **dadurch gekennzeichnet, dass** die Dekorschicht mit dem Zuschnitt des Halbhartschaums (5) über eine Sperrfolie kaschiert ist.

6. Schichtformkörper (1) nach einem der Ansprüche 1 bis 5, **dadurch** erhältlich, dass man in einem Arbeitsgang
a) auf einem Trägermedium (2) aus Papier, Folie oder Vlies ein die Strukturfestigkeit bestimmendes Fasermaterial in Form von Matten oder Zuschnitten auflegt, wobei das Fasermaterial Fasern aus Glas und/oder Naturfasern, ausgewählt aus Sisal, Hanf, Jute Flachs und/oder Baumwolle umfasst,
b) die Oberfläche des Fasermaterials mit einem expandierbaren Matrixmaterial aus Polyurethan, Epoxid- oder Polyesterharz versieht,
c) anschließend eine semipermeable Zwischenschicht (4) aus Papier, Folie oder Vlies und daran anschließend einen Zuschnitt eines halbharten Schaumstoffmaterials (5), umfassend einen Polyurethan-Halbhartschaum mit einer Dichte im Bereich von 10 bis 30 X kg/m³, auflegt und
d) den Schichtkörper (1) bei einer Temperatur im Bereich von 40 bis 120 °C in einem Formwerkzeug aushärtet
und gegebenenfalls eine dekorative Oberfläche in einem weiteren Arbeitsgang aufkaschiert.

7. Verfahren zur Herstellung eines Schichtformkörpers (1), gemäß einem der Ansprüche 1 bis 6, **dadurch gekennzeichnet, dass** man in einem Arbeitsgang
a) auf einem Trägermedium (2) aus Papier, Folie oder Vlies ein die Strukturfestigkeit bestimmendes Fasermaterial in Form von Matten oder Zuschnitten auflegt, wobei das Fasermaterial Fasern aus Glas und/oder Naturfasern, ausgewählt aus Sisal, Hanf, Jute Flachs und/oder Baumwolle umfaßt,
b) die Oberfläche des Fasermaterials mit einem expandierbaren Matrixmaterial aus Polyurethan, Epoxid- oder Polyesterharz versieht,
c) anschließend eine semipermeable Zwischenschicht (4) aus Papier, Folie oder Vlies und daran anschließend einen Zuschnitt eines halbharten Schaumstoffmaterials (5), umfassend einen Polyurethan-Halbhartschaum mit einer Dichte im Bereich von 10 bis 30 kg/m³, auflegt und
d) den Schichtkörper (1) bei einer Temperatur im Bereich von 40 bis 120 °C in einem Formwerkzeug aushärtet
und gegebenenfalls eine dekorative Oberfläche in einem weiteren Arbeitsgang aufkaschiert.

## Claims

1. A laminated shaped body (1) having a layer structure of the following order:
a) a support medium (2) consisting of paper, a plastic sheet or a non-woven material;
b) a matrix foam material (3) filled with fibrous material and determining the structural strength and consisting of expanded polyurethane, epoxy or polyester resin, wherein said fibrous material comprises fibers of glass and/or natural fibers selected from sisal, hemp, jute, flax and/or cotton;
c) a semipermeable intermediate layer (4) consisting of paper, a plastic sheet or a non-woven material; and
d) a predetermined blank of a semirigid foam material (5) comprising a polyurethane semirigid foam having a density within a range of from 10 to 30 kg/m³.

2. The laminated shaped body (1) according to claim 1, **characterized in that** said matrix foam material (3) has a higher density in regions with a high uptake of shock energy as compared to regions with a low uptake of shock energy.

3. The laminated shaped body (1) according to claim 1, **characterized in that** the distribution of the composition for the matrix foam material (3) in its raw state is adapted to the local uptake of shock energy.

4. The laminated shaped body (1) according to any of claims 1 to 3, **characterized by** further comprising
e) a decorative layer, especially of a textile material.

5. The laminated shaped body (1) according to claim 4, **characterized in that** said decorative layer is backed with said blank of semirigid foam material (5) through a barrier sheet.

6. The laminated shaped body (1) according to any of claims 1 to 5, **characterized by** the following steps, performed in a single operation:
a) placing a fibrous material determining the structural strength in the form of mats or blanks on a support medium (2) consisting of paper, a plastic sheet or a non-woven material, wherein said fibrous material comprises fibers of glass and/or natural fibers selected from sisal, hemp, jute, flax and/or cotton;
b) providing the surface of the fibrous material with an expandable matrix material consisting of polyurethane, epoxy or polyester resin;
c) followed by placing thereon a semipermeable intermediate layer (4) consisting of paper, a plastic sheet or a non-woven material, and subsequently a blank of a semirigid foam material (5) comprising a polyurethane semirigid foam having a density within a range of from 10 to 30 kg/m³; and
d) curing the laminated shaped body (1) in a mold at a temperature within a range of from 40 to 120 °C;
optionally followed by backing with a decorative surface in a further operation.

7. A method for preparing a laminated shaped body (1) according to any of claims 1 to 6, **characterized by** the following steps, performed in a single operation:
a) placing a fibrous material determining the structural strength in the form of mats or blanks on a support medium (2) consisting of paper, a plastic sheet or a non-woven material, wherein said fibrous material comprises fibers of glass and/or natural fibers selected from sisal, hemp, jute, flax and/or cotton;
b) providing the surface of the fibrous material with an expandable matrix material consisting of polyurethane, epoxy or polyester resin;
c) followed by placing thereon a semipermeable intermediate layer (4) consisting of paper, a plastic sheet or a non-woven material, and subsequently a blank of a semirigid foam material (5) comprising a polyurethane semirigid foam having a density within a range of from 10 to 30 kg/m³; and
d) curing the laminated shaped body (1) in a mold at a temperature within a range of from 40 to 120 °C;
optionally followed by backing with a decorative surface in a further operation.

## Revendications

1. Corps profilé stratifié (1) ayant une structure stratifiée dans l'ordre suivant:
a) moyen de support (2) en papier, feuille ou non-tissé;
b) matériau cellulaire de matrice (3) en résine de polyuréthane, d'époxyde ou de polyester expansée chargé d'un matériau fibreux et déterminant la solidité de structure, ledit matériau fibreux comprenant des fibres en verre et/ou des fibres naturels choisi parmi le sisal, le chanvre, le jute, le lin et/ou le coton;
c) couche intermédiaire semi-perméable (4) en papier, feuille ou non-tissé; et
d) flan prédéterminé d'un matériau cellulaire semi-rigide (5) comprenant un matériau cellulaire semi-rigide en polyuréthane ayant une densité comprise dans la gamme allant de 10 à 30 kg/m³.

2. Corps profilé stratifié (1) selon la revendication 1, **caractérisé en ce que** ledit matériau cellulaire de matrice (3) a une densité plus importante dans les zones de haute absorption d'énergie de choc que dans les zones de basse absorption d'énergie de choc.

3. Corps profilé stratifié (1) selon la revendication 1, **caractérisé en ce que** la distribution de la composition du matériau cellulaire de matrice (3) en état cru est adaptée à l'absorption d'énergie locale.

4. Corps profilé stratifié (1) selon l'une des revendications 1 à 3, **caractérisé en ce qu'**il comprend en outre une
e) couche de décoration, notamment en un matériau textile.

5. Corps profilé stratifié (1) selon la revendication 4, **caractérisé en ce que** ladite couche de décoration est doublée avec ledit flan du matériau cellulaire semi-rigide (5) au moyen d'une feuille de barrage.

6. Corps profilé stratifié (1) selon l'une des revendications 1 à 5 qui peut être obtenu en une seule opération par ce que l'on:
a) place un matériau cellulaire déterminant la solidité de structure sous la forme de nattes ou flans sur un moyen de support (2) en papier, feuille ou non-tissé, ledit matériau fibreux comprenant des fibres en verre et/ou des fibres naturelles choisies parmi le sisal, le chanvre, le jute, le lin et/ou le coton;
b) muni la surface dudit matériau fibreux d'un matériau de matrice expansible en résine de polyuréthane, d'époxyde ou de polyester;
c) place dessus ensuite une couche intermédiaire semi-perméable (4) en papier, feuille ou non-tissé et ensuite un flan d'un matériau cellulaire semi-rigide (5) comprenant un matériau cellulaire semi-rigide en polyuréthane ayant une densité comprise dans la gamme allant de 10 à 30 kg/m³; et
d) durcit le corps stratifié (1) à une température comprise dans la gamme allant de 40 à 120 °C dans une moule; et,
le cas échéant, double le corps obtenu avec une surface décorative en une autre opération.

7. Procédé pour la préparation d'un corps profilé stratifié (1) selon l'une des revendications 1 à 6, **caractérisé en ce que**, en une seule opération, l'on:
a) place un matériau cellulaire déterminant la solidité de structure sous la forme de nattes ou flans sur un moyen de support (2) en papier, feuille ou non-tissé, ledit matériau fibreux comprenant des fibres en verre et/ou des fibres naturelles choisies parmi le sisal, le chanvre, le jute, le lin et/ou le coton;
b) muni la surface dudit matériau fibreux d'un matériau de matrice expansible en résine de polyuréthane, d'époxyde ou de polyester;
c) place dessus ensuite une couche intermédiaire semi-perméable (4) en papier, feuille ou non-tissé et ensuite un flan d'un matériau cellulaire semi-rigide (5) comprenant un matériau cellulaire semi-rigide en polyuréthane ayant une densité comprise das la gamme allant de 10 à 30 kg/m³; et
d) durcit le corps stratifié (1) à une température comprise dans la gamme allant de 40 à 120 °C dans une moule; et,
le cas échéant, double le corps obtenu avec une surface décorative en une autre opération.
